# EUROPEAN PATENT APPLICATION

(11) **EP 4 610 315 A1**
(43) Date of publication of application: **03.09.2025**
(21) Application number: 23882527.7
(22) Date of filing: 19.10.2023
(51) Int. Cl.: C08L 83/07, C08L 83/05

(54) **SILICONE RUBBER PARTICLES AND AQUEOUS DISPERSION OF SILICONE RUBBER PARTICLES**

(30) Priority: 28.10.2022 JP 2022173374
(71) Applicant: SHIN-ETSU CHEMICAL CO., LTD., Tokyo 1000005 (JP)
(72) Inventor: INOKUCHI, Yoshinori, Annaka-shi, Gunma 379-0224 (JP)
(74) Representative: V.O.
(86) International application number: PCT/JP2023/037854
(87) International publication number: WO 2024/090322

(57) **Abstract**

[Problem]

The present invention has been made in consideration of the circumstances above and has an object to provide particles of silicone rubber having high strength and high elongation and with a small amount of aggregated particles, and a water dispersion of the silicone rubber particles.

[Solution]

A silicone rubber particle, wherein the silicone rubber particle is an addition reaction product of a curable liquid silicone composition comprising the following components (A-1), (A-2), and (A-3) and is spherical having a volume average particle size of 0.5 µm to 50 µm, (A-1) a diorganopolysiloxane having two or more alkenyl groups in one molecule and an amount of alkenyl groups of 0.0025 to 0.034 mol/100 g; (A-2) an organopolysiloxane resin comprising R¹₃SiO_{1/2} and SiO₄ units, wherein the molar ratio of R¹₃SiO_{1/2} units relative to SiO_{4/2} units is 0.60 or more to 1.7 or less, and having an amount of an alkenyl group of 0.001 mol/100 g or more, wherein R¹ is, independently of each other, a substituted or unsubstituted monovalent hydrocarbon group having 1 to 30 carbon atoms and having no alkenyl group, or an alkenyl group having 2 to 8 carbon atoms, and at least one of all the R¹ groups is an alkenyl group; and (A-3) an organohydrogen polysiloxane having two or more hydrogen atoms bonded to silicon atoms, referred to as a SiH group, in one molecule and an amount of SiH groups of 0.030 to 1.30 mol/100 g, and the amount of component (A-2) is 1.0 to 65 parts by mass, relative to 100 parts by mass of the total amount of components (A-1), (A-2), and (A-3).

## Description

### TECHNICAL FIELD

The present invention relates to particles of silicone rubber having high strength and high elongation, and a water dispersion of the silicone rubber particles.

### BACKGROUND OF THE INVENTION

Silicone rubber particles are used as stress-relieving agents for resins; light diffusers for resins; texture enhancers for cosmetics; matting agents, texture enhancers, and lubricants for paints and coating agents; and the like.

In general, silicone rubber particles do not contain fillers such as silica and thus have low rubber strength and low elongation. In applications for paints and coating agents, blended silicone rubber particles may break under load when the coating films are subjected to friction.

Patent Literature 1 proposes high-strength, silica-containing silicone rubber particles. The silicone rubber particles are produced using a method wherein silica is mixed into a curable liquid silicone composition, the mixture is dispersed (emulsified) in water containing a surfactant, and then subjected to a curing reaction. In this method, the resulting emulsion is unstable, and some particles may aggregate. In addition, it is difficult to increase the silica content in the particles, and it is also difficult to obtain rubber particles with higher strength.

Patent Literature 2 proposes organosiloxane-resin-containing silicone rubber particles containing, as raw materials, a diorganopolysiloxane having an alkenyl group, an organopolysiloxane resin, and an organohydrogen polysiloxane having hydrogen atoms bonded to silicon atoms. However, the silicone rubber particles described in Patent Literature 2 have low rubber strength and low elongation.

### PRIOR LITERATURES

### PATENT LITERATURES

Patent Literature 1: Japanese Patent Application Laid-Open No. Hei 4-168117/1992
Patent Literature 2: Japanese Patent Application Laid-Open No. 2000-204258

The present invention has been made in consideration of the circumstances above and has an object to provide particles of silicone rubber having high strength and high elongation and with a small amount of aggregated particles, and a water dispersion of the silicone rubber particles.

### DISCLOSURE OF THE INVENTION

### PROBLEMS TO BE SOLVED BY THE INVENTION

As a result of intensive studies to achieve the object above, the present inventor found that the object above is achieved by using a specific amount of an organopolysiloxane having an alkenyl group in organopolysiloxane-resin-containing silicone rubber particles comprising, as raw materials, a diorganopolysiloxane having an alkenyl group, an organopolysiloxane resin having an alkenyl group, and an organohydrogen polysiloxane having hydrogen atoms bonded to silicon atoms, resulting in the completion of the present invention.

That is, the present invention provides the following silicone rubber particles and the water dispersion of the silicone rubber particles.

A silicone rubber particle,
wherein the silicone rubber particle is an addition reaction product of a curable liquid silicone composition comprising the following components (A-1), (A-2), and (A-3) and is spherical having a volume average particle size of 0.5 µm to 50 µm,
(A-1) a diorganopolysiloxane having two or more alkenyl groups in one molecule and an amount of alkenyl groups of 0.0025 to 0.034 mol/100 g;
(A-2) an organopolysiloxane resin comprising R¹₃SiO_{1/2} and SiO₄ units, wherein the molar ratio of R¹₃SiO_{1/2} units relative to SiO_{4/2} units is 0.60 or more to 1.7 or less, and having an amount of an alkenyl group of 0.001 mol/100 g or more,
wherein R¹ is, independently of each other, a substituted or unsubstituted monovalent hydrocarbon group having 1 to 30 carbon atoms and having no alkenyl group, or an alkenyl group having 2 to 8 carbon atoms, and at least one of all the R¹ groups is an alkenyl group; and
(A-3) an organohydrogen polysiloxane having two or more hydrogen atoms bonded to silicon atoms, referred to as a SiH group, in one molecule and an amount of SiH groups of 0.030 to 1.30 mol/100 g, and
the amount of component (A-2) is 1.0 to 65 parts by mass, relative to 100 parts by mass of the total amount of components (A-1), (A-2), and (A-3).

Further, the present invention provides the aforesaid silicone rubber particle composed of a silicone rubber that having an elongation at break of 20% or more for a dumb-bell-shaped type 3 test piece as determined according to the test method defined in the Japanese Industrial Standards (JIS) K 6251, for a 1 mm thick rubber sheet subjected to a heat treatment at 150 °C for 30 minutes, and a tensile strength at break of 1.0 MPa or more as determined according to the test method defined in JIS K 6251.

Further, the present invention provides a water dispersion of the aforesaid silicone rubber particles, comprising
(A) the silicone rubber particles according to claim 1 or 2 in an amount of 100 parts by mass,
(B) a surfactant in an amount of 0.05 to 20 parts by mass; and
(C) water in an amount of 20 to 2,000 parts by mass.

### EFFECTS OF THE INVENTION

The silicone rubber particles of the present invention have high rubber strength and high elongation. The silicone particles and a water dispersion containing the silicone particles are useful for paints and coating agents that are subjected to friction.

### DETAILED DESCRIPTION OF THE INVENTION

The present invention is described in detail below.

### [Silicone rubber particles]

The silicone rubber particles (A) of the present invention are spherical. In the present specification, "spherical" refers to not only true spheres but also deformed spheres whose major axis length relative to minor axis length (aspect ratio), on average, is conventionally within the range of 1.0 to 4.0, preferably 1.0 to 2.0, more preferably 1.0 to 1.6, or even more preferably 1.0 to 1.4. The shape of the particles may be confirmed by observing the particles using an optical microscope, an electron microscope, or the like. The shape of the particles may also be determined using a dynamic image analysis particle shape analyzer.

The volume average particle size of the particles is 0.5 µm to 50 µm, preferably 1.0 µm to 30 um, or more preferably 2.0 µm to 20 µm. The volume average particle size is determined using the Coulter counter method (impedance method).

The silicone rubber of the silicone rubber particles (A) is a product of an addition reaction of a curable liquid silicone composition comprising a diorganopolysiloxane (A-1) having two or more alkenyl groups in one molecule, an organopolysiloxane resin (A-2) having an alkenyl group, and an organohydrogen polysiloxane (A-3) having two or more SiH groups in one molecule.

The diorganopolysiloxane having two or more alkenyl groups in one molecule of Component (A-1) is represented by the following average composition formula (1):

R²ₐR³_{b}SiO (4-a-b) /2 (1) .

In the formula (1), R² is, independently of each other, an unsubstituted or substituted monovalent hydrocarbon group having 1 to 30 carbon atoms and having no alkenyl group; R³ is, independently of each other, an alkenyl group having 2 to 8 carbon atoms; and a and b are positive numbers that satisfy 0 < a < 3, 0 < b ≤ 3, and 0.1 ≤ a + b ≤ 3.

The diorganopolysiloxanes represented by average composition formula (1) may be used alone or in combination of two or more kinds.

R² is an unsubstituted or substituted monovalent hydrocarbon group having 1 to 30 carbon atoms, and is preferably a monovalent hydrocarbon group having 1 to 22 carbon atoms, or more preferably a monovalent hydrocarbon group having 1 to 18 carbon atoms.

Examples of R² include: alkyl groups such as a methyl group, an ethyl group, a propyl group, a butyl group, a pentyl group, a hexyl group, a heptyl group, an octyl group, a decyl group, an undecyl group, a dodecyl group, a tetradecyl group, a pentadecyl group, a hexadecyl group, a heptadecyl group, an octadecyl group, a nonadecyl group, an icosyl group, a henicosyl group, a docosyl group, a tricosyl group, a tetracosyl group, or a triacontyl group; aryl groups such as a phenyl group, a tolyl group, or a naphthyl group; aralkyl groups such as a benzyl group or a phenethyl group; cycloalkyl groups such as a cyclopentyl group, a cyclohexyl group, or a cycloheptyl group; and hydrocarbon groups wherein some or all of the hydrogen atoms bonded to the carbon atoms of these groups are substituted with a halogen atom (a fluorine atom, a chlorine atom, a bromine atom, or an iodine atom) or other atom and/or substituent such as an acryloyloxy group, a methacryloyloxy group, an amino group, an epoxy group, a glycidoxy group, or a carboxyl group. Preferably, 50 mol% or more of all the R²s are methyl groups.

Examples of R³ include a vinyl group, an allyl group, a propenyl group, a butenyl group, a pentenyl group, a hexenyl group, and an octenyl group. A vinyl group, an allyl group, or a hexenyl group is preferable, and a vinyl group is more preferable.
a and b are preferably positive numbers that satisfy 0 < a ≤ 2.295, 0.005 ≤ b ≤ 2.3, and 0.5 ≤ a + b ≤ 2.3.

The silicone rubber particles of the present invention are particularly characterized by having an amount of alkenyl groups in Component (A-1) of 0.0025 to 0.034 mol/100 g. If the amount of alkenyl groups is more than 0.034 mol/100 g, that causes the strength and elongation of the resulting silicone rubber to decrease. If the amount of alkenyl groups is less than 0.0025 mol/100 g, that causes the structure to have a high degree of polymerization, so that causing the viscosity to increase, the viscosity of the curable liquid silicone comprising Components (A-2) and (A-3) to increase, and emulsification described below to become difficult. The amount of alkenyl groups is preferably 0.0030 to 0.027 mol/100 g, or more preferably 0.0035 to 0.020 mol/100 g.

The viscosity of Component (A-1) at 25 °C is preferably 100,000 mm²/s or less, or more preferably 50,000 mm²/s or less. If the viscosity is higher than 100,000 mm²/s, that causes the viscosity of the curable liquid silicone comprising Components (A-2) and (A-3) to increase and emulsification described below to become difficult. The lower limit of the viscosity is not particularly limited, but as a viscosity lower than approximately 150 mm²/s causes an amount of alkenyl groups of 0.033 mol/100 g or less to become difficult to achieve, the lower limit may be 150 mm²/s or more or particularly 300 mm²/s or more.

Furthermore, the structure of Component (A-1) may be linear, cyclic, or branched, and a linear structure or a branched structure having few branched units is particularly preferable. The bonding sites for alkenyl groups are not particularly limited, and they may bond to any silicon atoms in the side chains of the molecule or at the ends of the molecule.

Examples of linear structures include those represented by the following general formula (2):

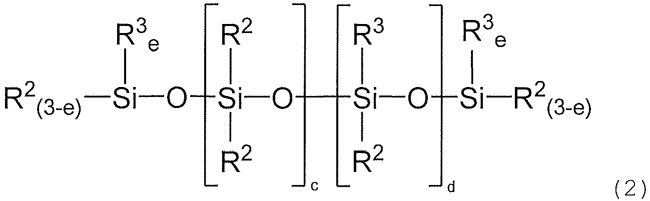

In the formula, R² and R³ are as defined above; c is a positive number of 10 to 1,500, preferably a positive number of 30 to 1,000, more preferably a positive number of 50 to 800, or even more preferably a positive number of 80 to 800; d is 0 or a positive number of 50 or less; and e is 0, 1, 2, or 3, provided that d and e are numbers that satisfy d + 2 × e ≥ 2.

Examples of branched structures include those represented by the following general formula (3) branched with R²SiO_{3/2} units:

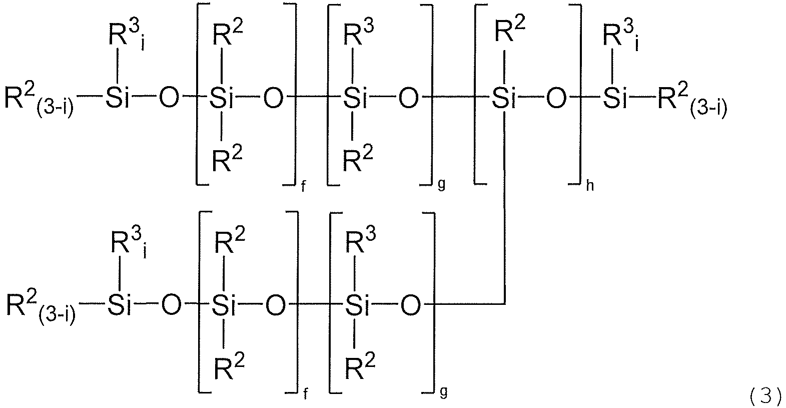

In the formula, R² and R³ are as defined above; f is a positive number of 10 to 1,500, preferably a positive number of 30 to 1,000, more preferably a positive number of 50 to 800, or even more preferably a positive number of 80 to 800; g is 0 or a positive number of 50 or less; h is a positive number of 1 to 10; and i is 0, 1, 2, or 3, provided that g and i are numbers that satisfy g + i ≥ 1.

Examples of structures branched with SiO_{4/2} units include those represented by the following general formula (4):

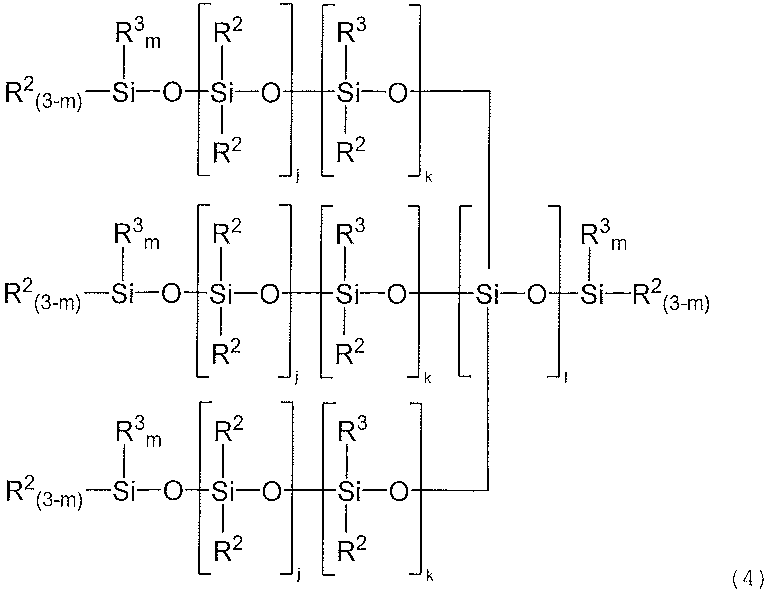

In the formula, R² and R³ are as defined above; j is a positive number of 10 to 1,500, preferably a positive number of 30 to 1,000, more preferably a positive number of 50 to 800, or even more preferably a positive number of 80 to 800; k is 0 or a positive number of 50 or less; 1 is a positive number of 1 to 5; and m is 0, 1, 2, or 3, provided that k and m are numbers that satisfy k + m ≥ 1.

Component (A-2) is an organopolysiloxane resin having an alkenyl group and comprising R¹₃SiO_{1/2} and SiO_{4/2} units. Component (A-2) is solid at 25 °C. In the aforesaid formula, R¹ is, independently of each other, a substituted or unsubstituted monovalent hydrocarbon group having 1 to 30 carbon atoms and having no alkenyl group, or an alkenyl group having 2 to 8 carbon atoms. At least one of all the R¹ groups is an alkenyl group. The organopolysiloxane resins may be used alone or in combination of two or more kinds.

The monovalent hydrocarbon group having no alkenyl group above has 1 to 30 carbon atoms, preferably 1 to 20 carbon atoms, or more preferably 1 to 10 carbon atoms. Examples of the monovalent hydrocarbon group having no alkenyl group include the groups exemplified for R², and preferably 50 mol% or more of all the R¹s are methyl groups.

Examples of the alkenyl group having 2 to 8 carbon atoms include a vinyl group, an allyl group, a propenyl group, a butenyl group, a pentenyl group, and a hexenyl group. A vinyl group or an allyl group is preferable, and a vinyl group is more preferable.

In the organopolysiloxane resin, the molar ratio of R¹₃SiO_{1/2} units (hereinafter referred to as M units) to SiO_{4/2} units (hereinafter referred to as Q units), that is, [moles of M units] / [moles of Q units], is 0.60 or more to 1.7 or less. The molar ratio is preferably 0.65 or more to 1.3 or less, more preferably 0.70 or more to 1.1 or less.

In addition to the M and Q units above, Component (A-2) may also contain (R⁴O) SiO_{3/2} units. In the aforesaid formula, R⁴ is, independently of each other, a hydrogen atom or an unsubstituted monovalent hydrocarbon group having 1 to 6 carbon atoms. The (R⁴O) SiO_{3/2} units are derived from the raw materials. Although R⁴O groups undergo a selfcondensation reaction, unreacted R⁴O groups may remain in the organopolysiloxane resin.

Examples of the unsubstituted monovalent hydrocarbon group having 1 to 6 carbon atoms include a methyl group, an ethyl group, a propyl group, a butyl group, a pentyl group, and a hexyl group. The content of (R⁴O) SiO_{3/2} units (referred to as Q₃ units) is preferably an amount such that the molar ratio of (R⁴O) SiO_{3/2} units to SiO_{4/2} units, [moles of (R⁴O) SiO_{3/2} units] / [moles of siO_{4/2} units], is less than 0.50. That is, [moles of Q₃ units] / [moles of Q units] is preferably 0 or more to 0.50 or less, more preferably 0.01 or more to 0.40 or less, or even more preferably 0.02 or more to 0.30 or less.

Component (A-2) may also contain R⁵SiO_{3/2} units and/or R⁶₂SiO_{2/2} units within a range that does not impair its solidifying properties at 25°C and its solubility relative to Components (A-1) and (A-3) in the production of the silicone rubber particles (A) described below. In the aforesaid formulas, R⁵ and R⁶ are, independently of each other, a substituted or unsubstituted monovalent hydrocarbon group having 1 to 30 carbon atoms. The content of R⁵SiO_{3/2} units (referred to as T units) and R⁶₂SiO_{2/2} units (referred to as D units) is preferably an amount such that [moles of T and D units] / [moles of Q units] is 0.3 or less.

The amount of alkenyl groups in Component (A-2) is 0.001 mol/100 g or more. If the amount of alkenyl groups is less than 0.001 mol/100 g, that causes the strength and elongation of the silicone rubber to decrease. The amount of alkenyl groups is preferably 0.005 mol/100 g or more, or more preferably 0.01 mol/100 g or more. The upper limit is not particularly limited. If the amount of alkenyl groups is more than 2.0 mol/100 g, a molar ratio of the moles of M units relative to the moles of Q units is not 1.7 or less. The upper limit may be 0.8 mol/100 g or less, or particularly 0.50 mol/100 g or less. The weight average molecular weight of Component (A-2), in terms of polystyrene using gel permeation chromatography, is preferably 1,000 to 10,000, or more preferably 2,000 to 8,000.

The organohydrogen polysiloxane having two or more SiH groups in one molecule of Component (A-3) is preferably represented by the following average composition formula (5):

R⁷ₙHₒSiO_{(4-n-o)/2} (5).

In the formula (5), R⁷ is, independently of each other, an unsubstituted or substituted monovalent hydrocarbon group having 1 to 30 carbon atoms and having no alkenyl group. n and o are numbers that satisfy 0 < n < 3, 0 < o ≤ 3, and 0.1 ≤ n + 0 ≤ 3.

The organohydrogen polysiloxanes represented by average composition formula (5) may be used alone or in combination of two or more kinds.

R⁷ has 1 to 30 carbon atoms, preferably has 1 to 22 carbon atoms, or more preferably has 1 to 18 carbon atoms. Examples of R⁷ include the monovalent hydrocarbon groups exemplified for R², and preferably 80 mol% or more of all the R⁷s are methyl groups. More preferably, 95 % or more of them are methyl groups.

n and o are preferably positive numbers that satisfy 0 < n ≤ 2.295, 0.005 ≤ 0 ≤ 2.3, and 0.5 ≤ n + o ≤ 2.3.

The amount of SiH groups in Component (A-3) is 0.030 to 1.30 mol/100 g. If the amount of SiH groups is less than 0.030 mol/100 g, that causes the strength and elongation of the silicone rubber to decrease. If the amount of SiH groups is more than 1.30 mol/100 g, that may cause dispersed particles in a water dispersion of silicone rubber particles described below to aggregate. The amount of SiH groups is preferably 0.050 to 1.10 mol/100 g, or more preferably 0.10 to 0.90 mol/100 g.

The viscosity of Component (A-3) at 25 °C is preferably 100,000 mm²/s or less, or more preferably 10,000 mm²/s or less. If the viscosity is 100,000 mm²/s or less, that causes silicone fine particles having a narrow particle size distribution to become particularly easy to obtain using the production method described below. The lower limit of the viscosity is not particularly limited and may be 0.4 mm²/s or more or particularly 2 mm²/s or more. Furthermore, the structure of Component (A-3) may be linear, cyclic, or branched, and a linear structure or a branched structure is particularly preferable. The bonding sites for hydrogen atoms bonded to silicon atoms are not particularly limited, and they may bond to any silicon atoms in the side chains of the molecule or at the ends of the molecule.

Examples of linear structures include those represented by the following general formula (6):

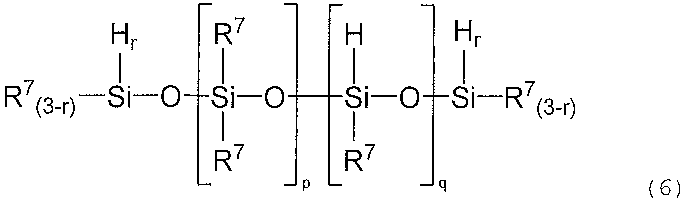

In the formula, R⁷ is as defined above; p is a positive number of 1,500 or less, preferably 1 to 1,000, more preferably 5 to 500, or even more preferably 10 to 100; q is 0 or a positive number of 300 or less, preferably 1 to 100, or more preferably 5 to 60; and r is 0, 1, 2, or 3, provided that q and r are numbers that satisfy q + 2 × r ≥ 2.

Examples of branched structures include those represented by the following general formula (7) branched with R⁷SiO_{3/2} units:

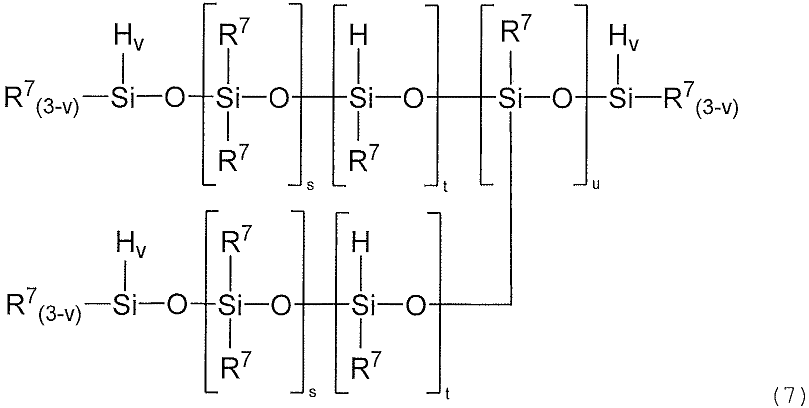

In the formula, R⁷ is as defined above; s is a positive number of 1,500 or less, preferably 1 to 1,000, more preferably 5 to 500, or even more preferably 10 to 100; t is 0 or a positive number of 300 or less, preferably 1 to 100, or more preferably 5 to 60; u is a positive number of 1 to 10; and v is 0, 1, 2, or 3, provided that t and v are numbers that satisfy t + v ≥ 1.

Examples of structures branched with SiO_{4/2} units include those represented by the following general formula (8) :

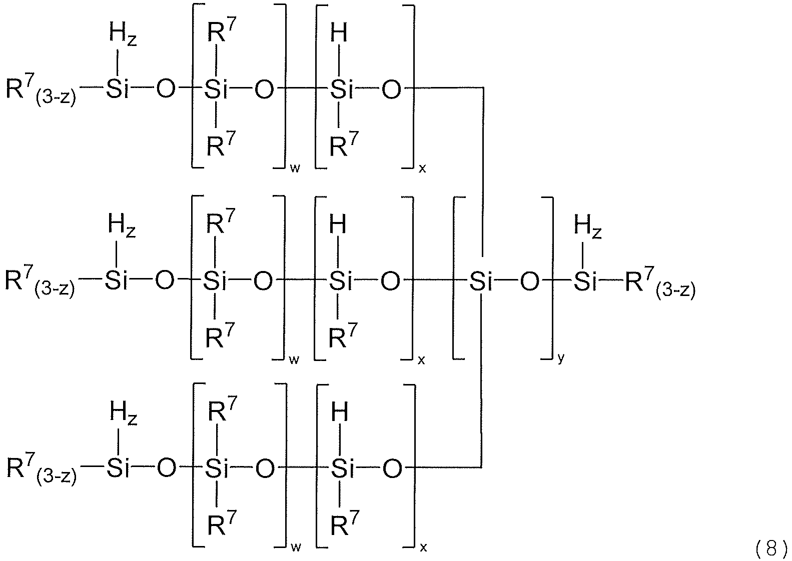

In the formula, R⁷ is as defined above; w is a positive number of 1,500 or less, preferably 1 to 1,000, more preferably 5 to 500, or even more preferably 10 to 100; x is 0 or a positive number of 300 or less, preferably 1 to 100, or more preferably 5 to 60; y is a positive number of 1 to 5; and z is 0, 1, 2, or 3, provided that x and z are numbers that satisfy x + z ≥ 1.

Other examples include those represented by the following unit formula (9)having two or more hydrogen atoms bonded to silicon atoms in one molecule.

[R⁷₃SiO_{1/2}]ₐ₁[H(R⁷)₂SiO_{1/2}]_{b1}[SiO_{4/2}]_{c1}[(OR⁸)SiO 3/2]_{d1} (9)

In the formula, R⁷ is as defined above; R⁸ is a hydrogen atom or an unsubstituted monovalent hydrocarbon group having 1 to 6 carbon atoms; a1 is 0 or a positive number; b1 is a positive number; c1 is a positive number; and d1 is 0 or a positive number. The upper limits of a1, b1, c1, and d1 are each 20.

The components, that is, the diorganopolysiloxane (A-1) having two or more alkenyl groups in one molecule, the organopolysiloxane resin (A-2) having an alkenyl group, and the organohydrogen polysiloxane (A-3) having two or more SiH groups in one molecule, are mixed and dissolved to form a curable liquid silicone composition.

In the curable liquid silicone composition, the amount of Component (A-2) is 1.0 to 65 parts by mass, relative to 100 parts by mass of the total amount of Components (A-1), (A-2), and (A-3). If the amount of Component (A-2) is less than 1.0 parts by mass, that causes the elongation and strength of the silicone rubber to decrease. If the amount of Component (A-2) is more than 65 parts by mass, that causes the viscosity of the liquid silicone composition to increase and emulsification described below to become difficult. The amount of Component (A-2) is preferably 2.0 to 55 parts by mass, or more preferably 4.0 to 45 parts by mass.

In the curable liquid silicone composition, the ratio of the number of SiH groups in Component (A-3) to the total amount of alkenyl groups in Components (A-1) and (A-2) is preferably 0.9 to 3.0. If the ratio of the number of SiH groups in Component (A-3) is less than 0.9, that causes the elongation and strength of the silicone rubber to decrease. If the ratio of the number of SiH groups is higher than 3.0, that may cause dispersed particles in a water dispersion of silicone rubber particles described below to aggregate. The ratio of the number of SiH groups is more preferably within the range of 1.0 to 2.3.

The silicone rubber of the silicone rubber particles (A) is a product of an addition reaction of the curable liquid silicone composition above. A catalyst is preferably used in the addition reaction. The catalyst for the addition reaction is, for example, a platinum-group-metal-based catalyst used in hydrosilylation reactions. Examples thereof include: platinum-group-metal simple substances such as platinum (including platinum black), rhodium, or palladium; platinum chlorides, chloroplatinic acids, and chloroplatinates such as H₂PtCl₄·XH₂O, H₂PtCl₆·XH₂O, NaHPtCl₆·XH₂O, KHPtCl₆·XH₂O, Na₂PtCl₆·XH₂O, K₂PtCl₄·XH₂O, PtCl₄·XH₂O, PtCl₂, or Na₂HPtCl₄·XH₂O (provided that, in the formulas, X is an integer of 0 to 6 or preferably 0 or 6); alcohol-modified chloroplatinic acids; olefin complexes of platinum chloride or chloroplatinic acid and vinyl-group-containing siloxane complexes of chloroplatinic acid or platinum; products obtained by supporting a platinum group metal such as platinum black or palladium with a carrier such as alumina, silica, or carbon; rhodium-olefin complexes; and chlorotris(triphenylphosphine)rhodium (Wilkinson's catalyst). These may be used alone or in combination of two or more kinds.

The blending amount of the platinum-group-metal-based catalyst may be an effective amount as an addition reaction catalyst. The amount of the platinum group metal in the platinum-group-metal-based catalyst is conventionally about 0.1 ppm to 500 ppm, preferably about 0.5 ppm to 200 ppm, or more preferably about 1 ppm to 100 ppm, in terms of mass, relative to the total amount of Components (A-1), (A-2), and (A-3). The addition reaction curing conditions of the curable liquid silicone composition are not particularly limited, but curing conditions of a temperature of 1 °C to 100 °C for 1 hour or more are preferable. The temperature is preferably 10 °C to 100 °C.

The silicone rubber of the silicone rubber particles (A) preferably has an elongation at break of 20 % or more and a tensile strength at break of 1.0 MPa or more. The elongation at break and tensile strength at break refer to values determined using the test method according to JIS K 6251: 2017 for a 1 mm thick dumb-bell-shaped type 3 test piece subjected to a heat treatment at 150°C for 30 minutes. More preferably, the elongation at break is 50 % or more and the tensile strength at break is 2.0 MPa or more. The upper limit of the elongation at break is not particularly limited and may be 1,000 % or less or particularly 500 % or less. The upper limit of the tensile strength at break is not particularly limited and may be 20 MPa or less or particularly 10 MPa or less.

The silicone rubber of the silicone rubber particles (A) preferably has a Type A durometer hardness value within the range of 20 to 95. The hardness refers to a value determined using the test method according to JIS K 6253: 2012 for a test piece subjected to a treatment at 150°C for 30 minutes. The hardness value is more preferably within the range of 40 to 85.

The silicone rubber may contain silicone oils, organosilanes, inorganic powders, organic powders, antioxidants, and the like.

### [Water dispersion of silicone rubber particles]

The water dispersion of silicone rubber particles of the present invention comprises the silicone rubber particles (A), a surfactant (B), and water (C).

The surfactant (B) functions as a dispersant for the silicone rubber particles. As described below, it also functions as an emulsifier for a curable liquid silicone composition in the production of the water dispersion of silicone rubber particles.

The surfactant (B) is not particularly limited and is a nonionic surfactant, an anionic surfactant, a cationic surfactant, or an amphoteric surfactant. A nonionic surfactant or an anionic surfactant is preferable. These may be used alone or in an appropriate combination of two or more kinds.

Examples of the nonionic surfactant include polyoxyethylene alkyl ethers, polyoxyethylene polyoxypropylene alkyl ethers, polyoxyethylene alkyl phenyl ethers, polyethylene glycol fatty acid esters, sorbitan fatty acid esters, polyoxyethylene sorbitan fatty acid esters, polyoxyethylene sorbitol fatty acid esters, glycerin fatty acid esters, polyoxyethylene glycerin fatty acid esters, polyglycerin fatty acid esters, propylene glycol fatty acid esters, polyoxyethylene castor oil, polyoxyethylene hydrogenated castor oil, polyoxyethylene hydrogenated castor oil fatty acid esters, polyoxyethylene alkyl amines, polyoxyethylene fatty acid amides, polyoxyethylene-modified organopolysiloxanes, and polyoxyethylene-polyoxypropylene-modified organopolysiloxanes.

Polyoxyethylene alkyl ethers or polyoxyethylene polyoxypropylene alkyl ethers having an HLB value of 12.0 to 19.0 are preferable. Polyoxyethylene alkyl ethers or polyoxyethylene polyoxypropylene alkyl ethers whose alkyl groups have 10 to 18 carbon atoms are more preferable. Furthermore, the HLB value is more preferably 13.0 to 18.0.

The HLB value as mentioned herein is a value calculated using Griffin's method represented by the following equation: HLB = [molecular weight of polyoxyethylene and alcohol moieties/molecular weight of surfactant] × 20. When two or more kinds of nonionic surfactants having different HLB values are used in combination, the HLB value above is a weighted average value.

Examples of the anionic surfactant include: alkyl sulfates such as sodium lauryl sulfate; polyoxyethylene alkyl ether sulfates; polyoxyethylene alkyl phenyl ether sulfates; fatty acid alkylol amide sulfates; alkyl benzene sulfonates; polyoxyethylene alkyl phenyl ether sulfonates; α-olefin sulfonates; α-sulfofatty acid esters and salts; alkyl naphthalene sulfonates; alkyl diphenyl ether disulfonates; alkane sulfonates; N-acyl taurates; dialkyl sulfosuccinates; monoalkyl sulfosuccinates; polyoxyethylene alkyl ether sulfosuccinates; fatty acid salts; polyoxyethylene alkyl ether carboxylates; N-acyl amino acid salts; monoalkyl phosphates; dialkyl phosphates; and polyoxyethylene alkyl ether phosphates.

Alkyl sulfates whose alkyl groups have 10 to 18 carbon atoms, polyoxyethylene alkyl ether sulfates, fatty acid alkylol amide sulfates, alkyl benzene sulfonates, α-sulfofatty acid esters and salts, alkane sulfonates, N-acyl taurates, polyoxyethylene alkyl ether sulfosuccinates, polyoxyethylene alkyl ether carboxylates, N-acyl amino acid salts, monoalkyl phosphates, dialkyl phosphates, polyoxyethylene alkyl ether phosphates, α-olefin sulfonates whose olefins have 10 to 18 carbon atoms, alkyl naphthalene sulfonates whose alkyl groups have 1 to 14 carbon atoms, and alkyl diphenyl ether disulfonates whose alkyl groups have 6 to 14 carbon atoms are preferable.

Examples of the cationic surfactant include alkyltrimethylammonium salts, dialkyldimethylammonium salts, polyoxyethylene alkyldimethylammonium salts, dipolyoxyethylene alkylmethylammonium salts, tripolyoxyethylene alkylammonium salts, alkylbenzyldimethylammonium salts, alkylpyridinium salts, monoalkyl amine salts, and monoalkyl amidoamine salts.

Examples of the amphoteric surfactant include alkyl dimethyl amine oxide, alkyl dimethyl carboxybetaine, alkyl amidopropyl dimethyl carboxybetaine, alkyl hydroxysulfobetaine, and alkyl carboxymethyl hydroxyethyl imidazolinium betaine.

The amount of Component (B) is 0.05 to 20 parts by mass, relative to 100 parts by mass of the silicone rubber particles (A). If the amount of Component (B) is less than 0.05 parts by mass, that may cause emulsification of a curable liquid silicone composition described below to become impossible and the stability of the water dispersion to decrease. If the amount of Component (B) is more than 20 parts by mass, that does not increase the water dispersion efficiency of the silicone rubber particles and may cause the characteristics of blended materials such as paints to be impaired. The amount of Component (B) is preferably 0.10 to 10 parts by mass, or more preferably 0.20 to 2 parts by mass.

Water (C) is a dispersion medium for the silicone rubber particles (A). The amount of Component (C) is 20 to 2,000 parts by mass or preferably 40 to 1,000 parts by mass, relative to 100 parts by mass of the silicone rubber particles (A).

Preservatives, thickeners, pH adjusters, defoamers, and the like may be appropriately blended into the water dispersion of silicone rubber particles, if necessary.

### [Production methods of the water dispersion of silicone rubber particles and silicone rubber particles]

The water dispersion of silicone rubber particles may be produced using known methods. Examples thereof include a method wherein the surfactant (B) and water (C) are added to a curable liquid silicone composition comprising Components (A-1), (A-2), and (A-3), the resultant is emulsified to form an emulsion, a platinum-group-metal-based catalyst is then added thereto, and an addition reaction is performed.

For emulsification, a general emulsifying and dispersing machine may be used. Examples thereof include: high-speed rotating centrifugal radial stirrers such as a homodisper; high-speed rotating shear stirrers such as a homomixer; high-pressure-jet emulsifying and dispersing machines such as a homogenizer; colloid mills; and ultrasonic emulsifiers. The stirring speed, time, and other conditions are not particularly limited as long as emulsification can be performed and the desired particle size can be achieved.

A platinum-group-metal-based catalyst is added after an emulsion is produced. When the platinum-group-metal-based catalyst has poor dispersibility in water, it is preferably added to the emulsion with the platinum-group-metal-based catalyst dissolved in a surfactant. Examples of the surfactant include those described above, and nonionic surfactants are particularly preferable. A platinum-group-metal-based catalyst may be blended into the curable liquid silicone composition in advance. In such a case, it is necessary to take measures such as adjusting the temperature, adjusting the amount of the catalyst, and blending in a reaction regulator such that the reaction does not proceed until the completion of emulsification.

The addition reaction may be performed at room temperature, 1 °C to 30 °C. In order to increase the reaction speed and reaction rate, it may be performed under heating at less than 100 °C. The addition reaction time is appropriately selected.

The silicone rubber particles are obtained by removing water (C) from the water dispersion of silicone rubber particles obtained in the step above.

Water (C) may be removed, for example, by heating and evaporating the water dispersion under normal pressure or reduced pressure. Examples thereof include a method of removing the dispersion liquid by leaving it to stand under heating, a method of removing the dispersion liquid while stirring and circulating it under heating, a method of spraying and dispersing the dispersion liquid in hot airflow like a spray dryer, and a method using a heat transfer fluid. As a pretreatment for this operation, the particles may be aggregated by adding an inorganic salt or the like and then concentrated using filtration separation such as pressure filtration, centrifugation, decantation, or other methods. Further, the concentrate may be washed with water, alcohol, or the like, if necessary.

When a silicone oil, organosilane, inorganic powder, organic powder, antioxidant, and the like are comprised in the silicone rubber particles, they may be dissolved or dispersed in the curable liquid silicone composition.

The water dispersion of silicone rubber particles or the silicone rubber particles of the present invention are blended, for example, into a paint, a coating agent, or the like and used. The paint, coating agent, or the like containing the silicone rubber particles is applied to a substrate, and, then, a heat treatment is preferably conducted at a temperature of 100 °C to 300 °C for 1 minute to 3 hours. The heat treatment causes the addition reaction rate to improve and the elongation and strength of the silicone rubber to increase. Furthermore, the silicone rubber particles may be subjected to a heat treatment at a temperature of 100 °C to 300 °C for 1 minute to 3 hours in advance before they are blended into a paint, a coating agent, or the like.

### EXAMPLES

The present invention will be explained below in further detail with reference to a series of the Examples and the Comparative Examples, though the present invention is in no way limited by these Examples.

In the examples, the kinematic viscosity is a value determined using a capillary viscometer at 25°C.

The following polysiloxanes were prepared.
(A-1)-1: Vinyl-group-containing dimethyl polysiloxane represented by formula (10) and having an amount of vinyl groups of 0.00627 mol/100 g and a kinematic viscosity of 5,060 mm²/s 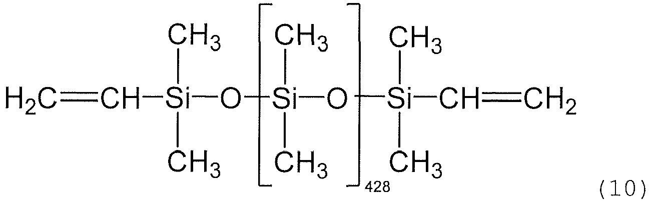
(A-1)-2: Vinyl-group-containing dimethyl polysiloxane represented by formula (11) and having an amount of vinyl groups of 0.00369 mol/100 g and a kinematic viscosity of 30,500 mm²/s 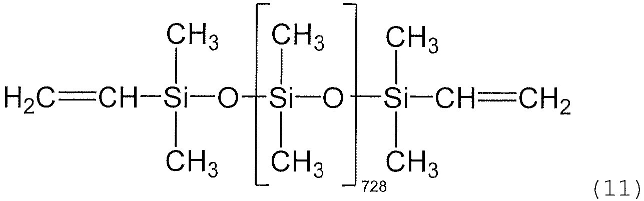
(A-1)-3: Vinyl-group-containing dimethyl polysiloxane represented by formula (12) and having an amount of vinyl groups of 0.0179 mol/100 g and a kinematic viscosity of 386 mm²/s 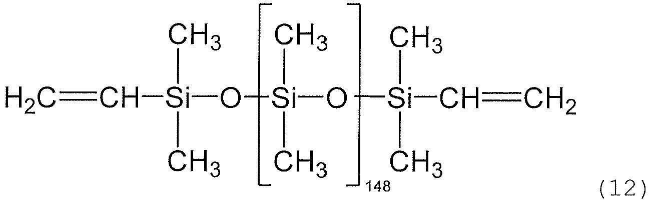
(A-1)-4: Vinyl-group-containing dimethyl polysiloxane, which is a dissolved product obtained by mixing (A-1)-1 and (A-1)-3 at a mass ratio of 40:60, having an amount of vinyl groups of 0.0132 mol/100 g and a kinematic viscosity of 1,080 mm²/s
(A-1)-5: Vinyl-group-containing dimethyl polysiloxane represented by formula (13) and having an amount of vinyl groups of 0.120 mol/100 g and a kinematic viscosity of 23 mm²/s, for the comparative example 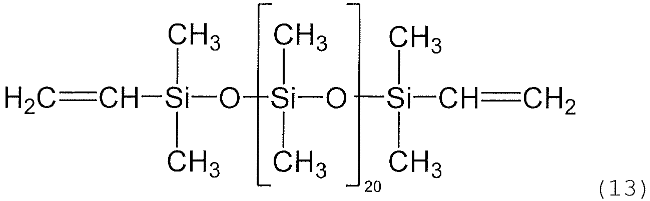
(A-1)-6: Vinyl-group-containing dimethyl polysiloxane represented by formula (14) and having an amount of vinyl groups of 0.0348 mol/100 g and a kinematic viscosity of 125 mm²/s, for the comparative example 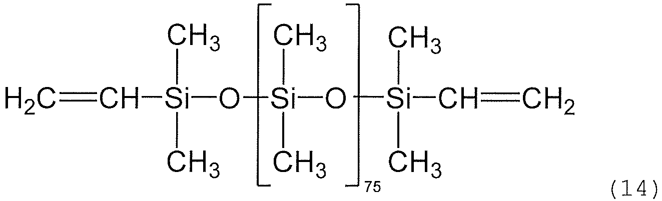
(A-1)-7: Vinyl-group-containing dimethyl polysiloxane represented by formula (15) and having an amount of vinyl groups of 0.0433 mol/100 g and a kinematic viscosity of 378 mm²/s, for the comparative example 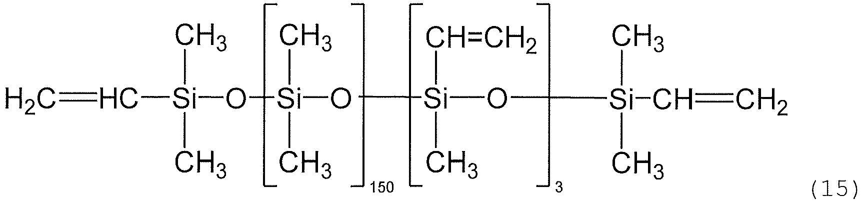
(A-2)-1: Vinyl-group-containing methyl polysiloxane resin comprising (CH₃)₃SiO_{1/2}, (CH₃)₂(CH=CH₂)SiO_{1/2}, SiO_{4/2}, HOSiO_{3/2}, and CH₃OSiO_{3/2} units and having the following molar ratios,
   The molar ratio ([(CH₃)₃SiO_{1/2}] + [(CH₃)₂(CH=CH₂)SiO_{1/2}]) / [SiO_{4/2}] is 0.83;
   the molar ratio [(CH₃)₃SiO_{1/2]} / [SiO_{4/2}] is 0.71;
   the molar ratio [(CH₃)₂(CH=CH₂)SiO_{1/2}] / [SiO_{4/2}] is 0.12;
   the molar ratio ([HOSiO_{3/2}] + [CH₃OSiO_{3/2}]) / [SiO_{4/2}] is 0.088;
   the molar ratio [HOSiO_{3/2}] / [SiO_{4/2}] is 0.041;
   the molar ratio [CH₃OSiO_{3/2}] / [SiO_{4/2}] is 0.047;
   the amount of vinyl groups is 0.089 mol/100 g; and the weight average molecular weight is 4,100.
(A-2)-2: Vinyl-group-containing methyl polysiloxane resin comprising (CH₃) ₃SiO_{1/2}, (CH=CH₂) ₃SiO_{1/2}, SiO_{4/2}, HOSiO_{3/2}, and C₂H₅OSiO_{3/2} units and having the following molar ratios,
   The molar ratio ([(CH₃)₃SiO_{1/2}] + [(CH=CH₂)₃SiO_{1/2}]) / [SiO_{4/2}] is 1.01;
   the molar ratio [(CH₃)₃SiO_{1/2}] / [SiO_{4/2}] is 0.90;
   the molar ratio [(CH=CH₂)₃SiO_{1/2}] / [SiO_{4/2}] is 0.11;
   the molar ratio ([HOSiO_{3/2}] + [C₂H₅OSiO_{3/21}) / [SiO_{4/2}] is 0.10;
   the molar ratio [HOSiO_{3/2}] / [SiO_{4/2}] is 0.050;
   the molar ratio [C₂H₅OSiO_{3/2}] / [SiO_{4/2}] is 0.050;
   the amount of vinyl groups is 0.23 mol/100 g; and the weight average molecular weight is 5,730.
(A-3)-1: Methyl hydrogen polysiloxane represented by formula (16) and having an amount of SiH groups of 0.418 mol/100 g and a kinematic viscosity of 27 mm²/s 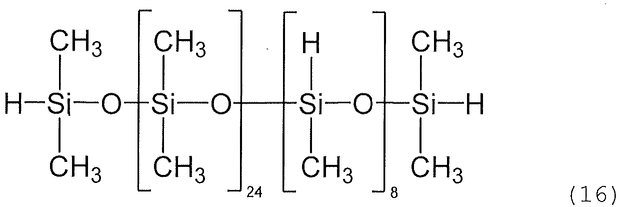
(A-3)-2: Methyl hydrogen polysiloxane represented by formula (17) and having an amount of SiH groups of 0.744 mol/100 g and a kinematic viscosity of 117 mm²/s 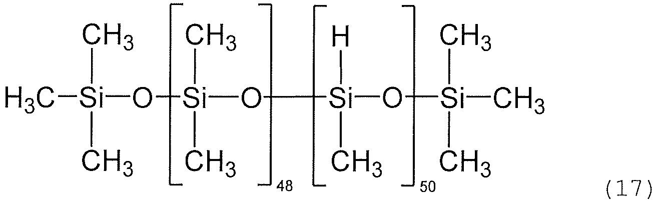
(A-3)-3: Methyl hydrogen polysiloxane represented by formula (18) and having an amount of SiH groups of 0.137 mol/100 g and a kinematic viscosity of 37 mm²/s 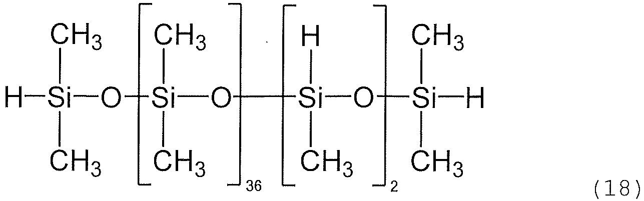
(A-3)-4: Methyl hydrogen polysiloxane represented by formula (19) and having an amount of SiH groups of 0.427 mol/100 g and a kinematic viscosity of 48 mm²/s

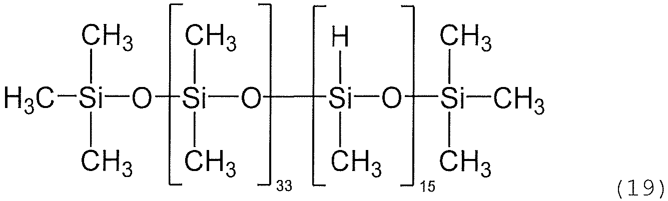

### [Example 1]

The vinyl-group-containing dimethyl polysiloxane (A-1)-1, the vinyl-group-containing methyl polysiloxane resin (A-2)-1, and the methyl hydrogen polysiloxane (A-3)-1 were mixed and dissolved at a mass ratio of 63.0:27.0:10.0 to prepare a curable liquid silicone composition. The ratio of the number of SiH groups in the methyl hydrogen polysiloxane to the total amount of vinyl groups in the vinyl-group-containing dimethyl polysiloxane and the vinyl-group-containing methyl polysiloxane resin is 1.49.

In a glass beaker having a volume of 1 L, were placed 500.0 g of the curable liquid silicone composition, 2.0 g of polyoxyethylene tridecyl ether (number of moles added ethylene oxide = 15 mol), and 80.0 g of water and stirred using a homomixer at 6,000 rpm, the resultant assumed an oil-in-water configuration, which was found to have increased viscosity. Stirring was further continued for 15 minutes. Then, 415.6 g of water was added thereto while stirring at 2,000 rpm to obtain a homogeneous white emulsion. This emulsion was transferred to a glass flask having a volume of 1 L, which was equipped with a stirrer having an anchor stirring blade, and the temperature was adjusted to 15 °C to 20 °C. Then, a mixed dissolved product of 1.2 g of an isododecane solution of a platinum- and vinyl-group-containing disiloxane complex (platinum content: 0.5%) and 1.2 g of polyoxyethylene lauryl ether (number of moles added ethylene oxide = 9 mol) were added thereto under stirring. The resultant was stirred at the same temperature for 6 hours, then the curable liquid silicone was cured using an addition reaction to obtain a water dispersion of silicone rubber particles.

The total amount of polyoxyethylene tridecyl ether and polyoxyethylene lauryl ether is 0.64 parts by mass, relative to 100 parts by mass of the resulting silicone rubber particles.

The shape of the silicone rubber particles was observed using an optical microscope and confirmed spherical. The volume average particle size thereof was 6.7 µm by the determination using a "Multisizer 3" particle size distribution measuring device (product name; manufactured by Beckman Coulter, Inc.).

Water was removed from the resulting water dispersion of silicone rubber particles by evaporation using a spray dryer at an inlet temperature of 150 °C and an outlet temperature of 80 °C, thereby obtaining silicone rubber particles. Further, the resulting silicone rubber particles were heated in a thermostatic chamber at 150 °C for 30 minutes.

The resulting silicone rubber particles did not exhibit any stickiness, and their shape was spherical when observed using an electron microscope.

The tensile strength at break and elongation at break of the silicone rubber of the silicone rubber particles were determined in the following manner.

In 100 parts by mass of a curable liquid silicone composition prepared with the same composition as Example 1 above, 0.24 parts by mass of an isododecane solution of a platinum- and vinyl-group-containing disiloxane complex (platinum content: 0.5%) and 0.05 parts by mass of ((1,1-dimethyl-propynyl)oxy)trimethylsilane (reaction regulator) were mixed, and the resulting mixture was then poured into a polypropylene tray so as to have a thickness of approximately 1 mm. After the resultant was left to stand at 25 °C for 24 hours, the cured silicone was peeled off the tray and heated in a thermostatic chamber at 150 °C for 30 minutes to obtain a silicone rubber sheet that did not exhibit any stickiness.

The silicone rubber sheet was cut to the shape and dimensions of a dumb-bell-shaped type 3 test piece according to JIS K 6251: 2017. The tensile strength at break and elongation at break of the silicone rubber sheet were determined according to the method defined in JIS K 6251: 2017. The tensile strength at break was 6.5 MPa, and the elongation at break was 101%.

The hardness of the silicone rubber of the silicone rubber particles was determined in the following manner.

In 100 parts by mass of a curable liquid silicone composition prepared with the same composition as Example 1 above, 0.24 parts by mass of an isododecane solution of a platinum- and vinyl-group-containing disiloxane complex (platinum content: 0.5%) and 0.05 parts by mass of ((1,1-dimethyl-propynyl)oxy)trimethylsilane (reaction regulator) were mixed, and the resulting mixture was then poured into an aluminum Petri dish so as to have a thickness of 10 mm. After the resultant was left to stand at 25 °C for 24 hours, it was heated in a thermostatic chamber at 150 °C for 30 minutes to obtain a silicone rubber that did not exhibit any stickiness. The hardness value of the silicone rubber was 58 when determined using a Type A durometer according to JIS K 6253.

### [Examples 2 to 11] and [Comparative Examples 1 to 10]

The procedures of Example 1 were repeated, except that used curable liquid silicone compositions were prepared by mixing and dissolving a vinyl-group-containing dimethyl polysiloxane, a vinyl-group-containing methyl polysiloxane resin (unused in some compositions), and a methyl hydrogen polysiloxane with the compositions described in Table 1 or 2, to obtain water dispersions of silicone rubber particles.

The volume average particle size of the silicone rubber particles, the shape of the silicone rubber particles, the tensile strength at break of the silicone rubber, the elongation at break of the silicone rubber, and the hardness of the silicone rubber were determined in the same manner as in Example 1 and are shown in Table 1 or 2.

**[Table 1]**

| Example | | 1 | 2 | 3 | 4 | 5 | 6 | 7 | 8 | 9 | 10 | 11 |
|---|---|---|---|---|---|---|---|---|---|---|---|---|
| Curable liquid silicone composition, Part by mass | (A-1)-1 | 63.0 | 53.5 | 73.9 | 86.1 | 91.6 | 35.7 | 82.6 | | | | |
| | (A-1)-2 | | | | | | | | 65.1 | 54.2 | | |
| | (A-1)-3 | | | | | | | | | | 62.4 | |
| | (A-1)-4 | | | | | | | | | | | 62.0 |
| | (A-2)-1 | 27.0 | 35.8 | 18.5 | 9.6 | 4.8 | 35.7 | | 27.9 | 36.1 | 26.7 | 26.6 |
| | (A-2)-2 | | | | | | | 9.2 | | | | |
| | (A-3)-1 | 10.0 | | 7.6 | 4.3 | 3.6 | | 8.2 | | | 10.9 | 11.4 |
| | (A-3)-2 | | 10.8 | | | | | | 7.0 | 9.7 | | |
| | (A-3)-3 | | | | | | 28.6 | | | | | |
| Molar ratio, H/Vi | | 1.49 | 2.29 | 1.51 | 1.29 | 1.50 | 1.15 | 1.30 | 1.91 | 2.11 | 1.30 | 1.50 |
| Volume average particle size, µm | | 6.7 | 6.3 | 6.9 | 8.3 | 7.3 | 5.8 | 7.6 | 8.2 | 7.8 | 5.7 | 5.9 |
| Shape observed using an electron microscope | | Spherical | Spherical | Spherical | Spherical | Spherical | Spherical | Spherical | Spherical | Spherical | Spherical | Spherical |
| Tensile strength at break, MPa | | 6.5 | 7.3 | 3.6 | 3.7 | 1.5 | 1.4 | 3.8 | 8.5 | 9.5 | 1.2 | 3.0 |
| Elongation at break, % | | 101 | 59 | 118 | 243 | 280 | 67 | 180 | 64 | 73 | 41 | 75 |
| Durometer A hardness | | 58 | 76 | 46 | 31 | 28 | 53 | 45 | 65 | 80 | 61 | 61 |

**[Table 2]**

| Comparative Example | | 1 | 2 | 3 | 4 | 5 | 6 | 7 | 8 | 9 | 10 |
|---|---|---|---|---|---|---|---|---|---|---|---|
| Curable liquid silicone composition, Part by mass | (A-1)-1 | 98.3 | | | | | | | | | |
| | (A-1)-5 | | 75.2 | | | | | | | | |
| | (A-1)-6 | | | 91.3 | 60.4 | 41.9 | 52.4 | 70.1 | 32.9 | | |
| | (A-1)-7 | | | | | | | | | 63.6 | 79.9 |
| | (A-2)-1 | | | | 25.9 | 41.9 | 35.0 | 17.5 | 32.9 | 24.8 | 9.9 |
| | (A-3)-1 | 1.7 | 24.8 | 8.7 | 13.7 | 16.2 | | 12.4 | | | |
| | (A-3)-2 | | | | | | 12.6 | | | | |
| | (A-3)-3 | | | | | | | | 34.2 | | |
| | (A-3)-4 | | | | | | | | | 11.6 | 10.2 |
| Molar ratio, H/Vi | | 1.16 | 1.15 | 1.14 | 1.30 | 1.31 | 1.90 | 1.30 | 1.15 | 1.00 | 1.00 |
| Volume average particle size, µm | | 6.0 | 6.6 | 5.3 | 6.6 | 5.5 | 5.5 | 6.4 | 5.8 | 6.7 | 5.5 |
| Shape observed using an electron microscope | | Spherical | Spherical | Spherical | Spherical | Spherical | Spherical | Spherical | Spherical | Spherical | Spherical |
| Tensile strength at break, MPa | | 0.63 | 0.87 | 0.39 | 0.74 | 1.3 | 1.2 | 0.83 | 0.84 | 0.69 | 0.73 |
| Elongation at break, % | | 230 | 16 | 33 | 19 | 18 | 13 | 38 | 49 | 18 | 49 |
| Durometer A hardness | | 20 | 63 | 43 | 63 | 76 | 79 | 57 | 51 | 60 | 57 |

### [Example 12]

The vinyl-group-containing dimethyl polysiloxane (A-1)-4, the vinyl-group-containing methyl polysiloxane resin (A-2)-1, and the methyl hydrogen polysiloxane (A-3)-1 were mixed and dissolved at a mass ratio of 62.0:26.6:11.4 to prepare a curable liquid silicone composition. This composition was the same as the curable liquid silicone composition of Example 11.

The tensile strength at break of the resulting silicone rubber was 3.0 MPa, the elongation at break was 75%, and the Type A durometer hardness value of the rubber was 61.

In a glass beaker having a volume of 1 L, were placed 500.0 g of the curable liquid silicone composition above, 1.0 g of polyoxyethylene tridecyl ether (number of moles added ethylene oxide = 15 mol), and 100.0 g of water and stirred using a homomixer at 6,000 rpm, the resultant assumed an oil-in-water configuration, which was found to have increased viscosity. Stirring was further continued for 15 minutes. Then, 396.6 g of water was added thereto while stirring at 2,000 rpm to obtain a homogeneous white emulsion. This emulsion was transferred to a glass flask having a volume of 1 L, which was equipped with a stirrer having an anchor stirring blade, and the temperature was adjusted to 15 °C to 20 °C. Then, a mixed dissolved product of 1.2 g of an isododecane solution of a platinum- and vinyl-group-containing disiloxane complex (platinum content: 0.5%) and 1.2 g of polyoxyethylene lauryl ether (number of moles added ethylene oxide = 9 mol) were added thereto under stirring. The resultant was stirred at the same temperature for 6 hours to obtain a water dispersion of silicone rubber particles.

The shape of the silicone rubber particles was observed using an optical microscope and confirmed spherical. The volume average particle size thereof was 11 µm by the determination using a "Multisizer 3" particle size distribution measuring device (product name; manufactured by Beckman Coulter, Inc.). Water was removed from the resulting water dispersion of silicone rubber particles by evaporation using a spray dryer at an inlet temperature of 150 °C and an outlet temperature of 80 °C, thereby obtaining silicone rubber particles. Further, the resulting silicone rubber particles were heated in a thermostatic chamber at 150 °C for 30 minutes. The resulting silicone rubber particles did not exhibit any stickiness, and their shape was spherical when observed using an electron microscope.

### [Example 13]

In a glass beaker having a volume of 1 L, were placed 500.0 g of the same curable liquid silicone composition as Example 12 above, 6.0 g of polyoxyethylene tridecyl ether (number of moles added ethylene oxide = 15 mol), and 40.0 g of water and stirred using a homomixer at 6,000 rpm, the resultant assumed an oil-in-water configuration, which was found to have increased viscosity. Then, the mixer was changed to a disperser, and the resultant was stirred at 4,000 rpm for 15 minutes. The mixer was changed again to a homomixer, and 451.6 g of water was added thereto while stirring at 2,000 rpm to obtain a homogeneous white emulsion. This emulsion was transferred to a glass flask having a volume of 1 L, which was equipped with a stirrer having an anchor stirring blade, and the temperature was adjusted to 15 °C to 20 °C. Then, a mixed dissolved product of 1.2 g of an isododecane solution of a platinum- and vinyl-group-containing disiloxane complex (platinum content: 0.5%) and 1.2 g of polyoxyethylene lauryl ether (number of moles added ethylene oxide = 9 mol) were added thereto under stirring. The resultant was stirred at the same temperature for 6 hours to obtain a water dispersion of silicone rubber particles.

The shape of the silicone rubber particles was observed using an optical microscope and confirmed spherical. The volume average particle size thereof was 1.9 µm by the determination using a "Multisizer 3" particle size distribution measuring device (product name; manufactured by Beckman Coulter, Inc.). Water was removed from the resulting water dispersion of silicone rubber particles by evaporation using a spray dryer at an inlet temperature of 150 °C and an outlet temperature of 80 °C, thereby obtaining silicone rubber particles. Further, the resulting silicone rubber particles were heated in a thermostatic chamber at 150 °C for 30 minutes. The resulting silicone rubber particles did not exhibit any stickiness, and their shape was spherical when observed using an electron microscope.

### [Example 14]

In a glass beaker having a volume of 1 L, were placed 500.0 g of the same curable liquid silicone composition as Example 12 above, 5.7 g of an aqueous solution of 35 % sodium pentyl naphthalene sulfonate (amount of sodium pentyl naphthalene sulfonate = approximately 2.0 g), and 76.0 g of water and stirred using a homomixer at 6,000 rpm, the resultant assumed an oil-in-water configuration, which was found to have increased viscosity. Then, the mixer was changed to a disperser, and the resultant was stirred at 4,000 rpm for 15 minutes. The mixer was changed again to a homomixer, and 415.9 g of water was added thereto while stirring at 2,000 rpm to obtain a homogeneous white emulsion. This emulsion was transferred to a glass flask having a volume of 1 L, which was equipped with a stirrer having an anchor stirring blade, and the temperature was adjusted to 15 °C to 20 °C. Then, a mixed dissolved product of 1.2 g of an isododecane solution of a platinum- and vinyl-group-containing disiloxane complex (platinum content: 0.5 %) and 1.2 g of polyoxyethylene lauryl ether (number of moles added ethylene oxide = 9 mol) were added thereto under stirring. The resultant was stirred at the same temperature for 6 hours to obtain a water dispersion of silicone rubber particles.

The shape of the silicone rubber particles was spherical when observed using an optical microscope, and the volume average particle size thereof was 6.4 µm when determined using a "Multisizer 3" particle size distribution measuring device (product name; manufactured by Beckman Coulter, Inc.).

Water was removed from the resulting water dispersion of silicone rubber particles by evaporation using a spray dryer at an inlet temperature of 150 °C and an outlet temperature of 80 °C, thereby obtaining silicone rubber particles. Further, the resulting silicone rubber particles were heated in a thermostatic chamber at 150 °C for 30 minutes. The resulting silicone rubber particles did not exhibit any stickiness, and their shape was spherical when observed using an electron microscope.

## Claims

1. A silicone rubber particle,
wherein the silicone rubber particle is an addition reaction product of a curable liquid silicone composition comprising the following components (A-1), (A-2), and (A-3) and is spherical having a volume average particle size of 0.5 µm to 50 µm,
(A-1) a diorganopolysiloxane having two or more alkenyl groups in one molecule and an amount of alkenyl groups of 0.0025 to 0.034 mol/100 g;
(A-2) an organopolysiloxane resin comprising R¹₃SiO_{1/2} and SiO₄ units, wherein the molar ratio of R¹₃SiO_{1/2} units relative to SiO_{4/2} units is 0.60 or more to 1.7 or less, and having an amount of an alkenyl group of 0.001 mol/100 g or more,
wherein R¹ is, independently of each other, a substituted or unsubstituted monovalent hydrocarbon group having 1 to 30 carbon atoms and having no alkenyl group, or an alkenyl group having 2 to 8 carbon atoms, and at least one of all the R¹ groups is an alkenyl group; and
(A-3) an organohydrogen polysiloxane having two or more hydrogen atoms bonded to silicon atoms, referred to as a SiH group, in one molecule and an amount of SiH groups of 0.030 to 1.30 mol/100 g, and
the amount of component (A-2) is 1.0 to 65 parts by mass, relative to 100 parts by mass of the total amount of components (A-1), (A-2), and (A-3).

2. The silicone rubber particle according to claim 1, composed of a silicone rubber having an elongation at break of 20 % or more for a dumb-bell-shaped type 3 test piece as determined according to the test method defined in the Japanese Industrial Standards (JIS) K 6251, for a 1 mm thick rubber sheet subjected to a heat treatment at 150 °C for 30 minutes, and a tensile strength at break of 1.0 MPa or more as determined according to the test method defined in JIS K 6251.

3. A water dispersion of the silicone rubber particle, comprising
(A) the silicone rubber particles according to claim 1 or 2 in an amount of 100 parts by mass,
(B) a surfactant in an amount of 0.05 to 20 parts by mass, and
(C) water in an amount of 20 to 2,000 parts by mass.
